(19) Europäisches Patentamt / European Patent Office / Office européen des brevets

(11) **EP 3 268 254 B1**

(12) **FASCICULE DE BREVET EUROPEEN**

(45) Date de publication et mention de la délivrance du brevet:
**01.05.2019 Bulletin 2019/18**

(21) Numéro de dépôt: **16714992.1**

(22) Date de dépôt: **02.03.2016**

(51) Int Cl.:
*B60W 10/02* (2006.01)   *B60W 30/18* (2012.01)
*B60W 50/00* (2006.01)

(86) Numéro de dépôt international:
**PCT/FR2016/050470**

(87) Numéro de publication internationale:
**WO 2016/142604 (15.09.2016 Gazette 2016/37)**

(54) **PROCÉDÉ ET DISPOSITIF DE CONTRÔLE DE L'OUVERTURE / FERMETURE DE LA CHAÎNE DE TRANSMISSION D'UN VÉHICULE SUIVANT UN AUTRE VÉHICULE**

VERFAHREN UND VORRICHTUNG ZUM STEUERN DER ÖFFNUNG / SCHLIESSUNG DES ANTRIEBSSTRANGS EINES HINTER EINEM FAHRZEUG FAHRENDEN FAHRZEUGS

METHOD AND DEVICE FOR CONTROLLING THE OPENING /CLOSING OF THE DRIVE TRAIN OF A VEHICLE FOLLOWING AN OTHER VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2015 FR 1551973**

(43) Date de publication de la demande:
**17.01.2018 Bulletin 2018/03**

(73) Titulaire: **PSA AUTOMOBILES S.A.**
**78300 Poissy (FR)**

(72) Inventeurs:
• **DESCHAMPS, Vincent**
**92130 Issy Les Moulineaux (FR)**
• **LEFRANC, Sébastien**
**91370 Verrières Le Buisson (FR)**

(56) Documents cités:
**EP-A1- 2 738 412      EP-A2- 1 475 265**
**DE-A1-102011 050 739**

**Description**

L'invention concerne les véhicules, éventuellement de type automobile, et comprenant une chaîne de transmission dont l'ouverture et la fermeture peuvent être contrôlées.

Comme le sait l'homme de l'art, certains véhicules, généralement de type automobile, comportent une fonction dite de roue libre consistant, lorsque leur conducteur cesse d'appuyer sur la pédale d'accélérateur (ou « levée de pied »), à ouvrir leur chaîne de transmission et, si l'architecture le permet, à couper le moteur, de manière à réduire la consommation de carburant.

On entend ici par « chaîne de transmission ouverte » un placement de la chaîne de transmission dans une configuration autorisant un fonctionnement en roue libre soit avec le moteur thermique continuant de tourner au ralenti (ou « free wheeling »), soit avec le moteur thermique coupé (« sailing »), soit avec une désactivation des cylindres (le moteur continuant de tourner au ralenti, mais avec des cylindres « désactivés »).

Si après l'ouverture de la chaîne de transmission, consécutive à une levée de pied, le conducteur freine, alors la chaîne de transmission est de nouveau refermée, et on se retrouve dans une phase de roulage avec le frein moteur et en coupure d'injection. Pour que la chaîne de transmission puisse être de nouveau ouverte, il faut alors que le conducteur ré-appuie sur la pédale d'accélérateur puis cesse de nouveau d'appuyer sur la pédale d'accélérateur (levée de pied).

Ce type de fonction peut permettre de réduire la consommation, y compris lorsque le moteur n'est pas coupé. En effet, si l'on n'a pas besoin de freiner, alors le soutien du ralenti du moteur (typiquement à 750 tr/min) induit une dissipation de puissance inférieure à celle qui est dissipée lorsque la chaîne de transmission demeure fermée à un régime bien supérieur au ralenti (typiquement > 1500 tr/min).

Cependant ce type de fonction présente un inconvénient en termes d'agrément de conduite. En effet, lorsqu'un premier véhicule est précédé par un second véhicule dont la vitesse en cours impose une décélération du premier véhicule supérieure à la décélération que ce dernier offre lorsque sa chaîne de transmission est ouverte, alors le conducteur du premier véhicule est contraint, dans un premier temps, de cesser d'appuyer sur la pédale d'accélérateur afin d'annuler le couple qui est fourni aux roues. Le niveau de décélération ressenti est alors inférieur au niveau de décélération que l'on aurait si la chaîne de transmission était fermée avec le pied levé de la pédale d'accélérateur (et donc en coupure d'injection). Par conséquent, le conducteur va devoir appuyer sur la pédale de frein pour que la chaîne de transmission se referme et que l'action conjuguée du frein moteur et du système de freinage hydraulique induise une décélération du premier véhicule. On comprendra qu'il aurait été plus judicieux et plus confortable pour le conducteur du premier véhicule que la chaîne de transmission demeure fermée.

Le document EP 2 738 412 divulgue le préambule des revendications 1 et 4 et décrit un dispositif de contrôle de l'accélération, le contrôle étant fondé sur l'influence de l'effet du changement d'état de la chaine de transmission. Le document EP 1 475 265 décrit un procédé de contrôle de l'accélération également fondé sur l'influence de l'effet du changement d'état de la chaine de transmission.

L'invention a donc notamment pour but d'améliorer la situation.

Elle propose notamment à cet effet un procédé, destiné à permettre le contrôle de l'ouverture/fermeture d'une chaîne de transmission d'un premier véhicule comportant une pédale d'accélérateur, et comprenant une étape dans laquelle, lorsqu'un second véhicule circule devant le premier véhicule à une distance connue et avec une vitesse relative connue par rapport au premier véhicule, ce dernier détermine, lorsque son conducteur n'appuie plus sur la pédale d'accélérateur, si il doit subir une première décélération supérieure à une seconde décélération assurée lorsque la chaîne de transmission est fermée, et dans l'affirmative il maintient fermée cette dernière, tandis que dans la négative il ouvre la chaîne de transmission.

Grâce à ce contrôle de la fonction de roue libre en fonction des situations de vie, on peut améliorer sensiblement l'agrément de conduite d'un véhicule suivant un autre véhicule, tout en réalisant des économies de carburant.

Le procédé de contrôle selon l'invention peut comporter d'autres caractéristiques qui peuvent être prises séparément ou en combinaison, et notamment :

- le second véhicule peut émettre par voie d'ondes un message signalant au moins sa vitesse en cours. Dans ce cas, à réception du message le premier véhicule peut déterminer la vitesse relative du second véhicule en fonction de sa propre vitesse en cours et de la vitesse en cours du second véhicule, et estimer la distance le séparant du second véhicule ;
- en variante, le premier véhicule peut estimer la vitesse relative du second véhicule et la distance le séparant du second véhicule en fonction de données d'observation, qui sont acquises dans une zone avant comprenant le second véhicule par des moyens d'observation qu'il comprend (comme par exemple, un radar), et de sa propre vitesse en cours ;
- lorsque le conducteur n'appuie plus sur la pédale d'accélérateur et que la chaîne de transmission est ouverte, le premier véhicule peut estimer une évolution de la distance en cas de fermeture de la chaîne de transmission, et peut déterminer s'il faut utiliser un frein moteur en fermant la chaîne de transmission, en fonction de cette estimation d'évolution de la distance, et dans la négative le premier véhicule maintient ouverte la chaîne de transmission, tandis que dans l'affirmative le premier véhicule ferme la chaîne de transmission ;

- lorsque le conducteur n'appuie plus sur la pédale d'accélérateur et que la chaîne de transmission est fermée, le premier véhicule peut estimer une évolution de la distance en cas d'ouverture de la chaîne de transmission, et peut déterminer s'il faut ouvrir la chaîne de transmission en fonction de cette estimation d'évolution de la distance, et dans la négative le premier véhicule maintient fermée la chaîne de transmission, tandis que dans l'affirmative le premier véhicule ouvre la chaîne de transmission ;

- le premier véhicule peut estimer l'évolution de la distance en fonction de la vitesse relative, de la distance connue et d'informations topographiques d'une portion de voie de circulation que les premier et second véhicules s'apprêtent à emprunter.

L'invention propose également un dispositif, destiné à contrôler l'ouverture/fermeture d'une chaîne de transmission d'un premier véhicule comportant une pédale d'accélérateur, et agencé pour déterminer, lorsqu'un second véhicule circule devant le premier véhicule à une distance connue et avec une vitesse relative connue par rapport au premier véhicule, et lorsqu'un conducteur du premier véhicule n'appuie plus sur la pédale d'accélérateur, si le premier véhicule doit subir une première décélération supérieure à une seconde décélération assurée lorsque la chaîne de transmission est fermée, et dans l'affirmative pour ordonner le maintien de la fermeture de cette dernière, ou dans la négative pour ordonner une ouverture de la chaîne de transmission.

L'invention propose également un véhicule, éventuellement de type automobile, et comprenant une chaîne de transmission, une pédale d'accélérateur, et un dispositif de contrôle du type de celui présenté ci-avant.

D'autres caractéristiques et avantages de l'invention apparaîtront à l'examen de la description détaillée ci-après, et des dessins annexés, sur lesquels:

- la figure 1 illustre schématiquement et fonctionnellement un véhicule comprenant une chaîne de transmission et un calculateur de supervision comprenant un dispositif de contrôle selon l'invention, et

- la figure 2 illustre schématiquement un exemple d'algorithme mettant en oeuvre un procédé de contrôle selon l'invention.

L'invention a notamment pour but de proposer un procédé de contrôle, et un dispositif de contrôle DC associé, destinés à permettre un contrôle de l'ouverture/fermeture d'une chaîne de transmission d'un premier véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre, disposant d'une chaîne de transmission dont l'ouverture et la fermeture peuvent être contrôlées automatiquement.

Par ailleurs, on considère dans ce qui suit, à titre d'exemple non limitatif, que le véhicule V comprend une chaîne de transmission de type conventionnel, c'est-à-dire ne comportant comme source de couple qu'un moteur thermique MT. Mais ce véhicule pourrait comprendre une chaîne de transmission de type hybride, c'est-à-dire comportant au moins un moteur thermique et au moins un moteur (ou une machine) auxiliaire capable de fournir du couple à partir de l'énergie qui est stockée dans des moyens de stockage d'énergie (comme par exemple un moteur électrique ou à air comprimé).

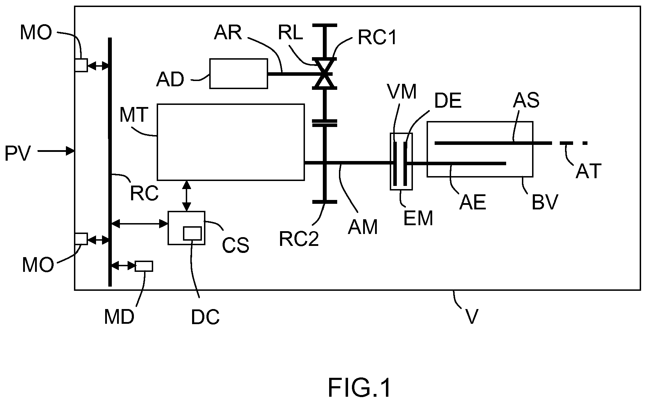

On a schématiquement représenté sur la figure 1 un véhicule V comprenant une chaîne de transmission, un calculateur de supervision CS propre à superviser le fonctionnement de la chaîne de transmission, et un dispositif de contrôle DC selon l'invention.

La chaîne de transmission comprend notamment, ici, un moteur thermique MT, un arbre moteur AM, une boite de vitesses BV et un embrayage EM.

Le moteur thermique MT comprend un vilebrequin (non représenté) qui est solidarisé fixement à l'arbre moteur AM afin d'entraîner ce dernier (AM) en rotation.

La boîte de vitesses BV comprend au moins un arbre d'entrée (ou primaire) AE et un arbre de sortie AS destinés à être couplés l'un à l'autre. L'arbre d'entrée AE est destiné à recevoir le couple moteur via l'embrayage EM. L'arbre de sortie AS est destiné à recevoir le couple moteur via l'arbre d'entrée AE afin de le communiquer à l'arbre de transmission AT auquel il est couplé et qui est couplé indirectement à des roues du véhicule V. On notera que la boîte de vitesses BV peut être robotisée ou non. Par conséquent, il peut s'agir d'une boîte de vitesses automatique, d'une boîte de vitesses manuelle pilotée, d'une boîte de vitesses manuelle couplée à une pédale d'embrayage dite « by-wire » (permettant de piloter l'embrayage indépendamment de la demande du conducteur, et en particulier de débrayer lorsque la pédale d'embrayage est en position embrayée), ou d'une boîte de vitesses à double embrayage (ou DCT).

L'embrayage EM comprend notamment, ici, un volant moteur VM qui est solidarisé fixement à l'arbre moteur AM et un disque d'embrayage DE qui est solidarisé fixement à l'arbre d'entrée AE.

On notera que dans l'exemple non limitatif illustré sur la figure 1, la chaîne de transmission comprend également une machine électrique AD qui constitue, par exemple, un alterno-démarreur chargé notamment de lancer le moteur thermique MT afin de lui permettre de démarrer, y compris en présence d'un système de contrôle d'arrêt et de redémarrage automatique (ou « stop and start »). Cet alterno-démarreur AD est chargé d'entraîner en rotation un arbre de rotor (ou d'induit) AR qui est ici solidarisé à une roue libre RL destinée à être couplée sur ordre à un pignon ou une roue de couplage RC1 qui engrène de façon permanente un autre pignon ou une autre roue de couplage RC2 solidarisé(e) fixement à l'arbre moteur AM.

Les fonctionnements du moteur thermique MT, de l'alterno-démarreur AD et de l'embrayage EM sont ici contrôlés par le calculateur de supervision CS. Mais ils pourraient être contrôlés par plusieurs (au moins deux) calculateurs. Ce contrôle s'effectue en fonction d'informations et d'instructions fournies par des équipements électroniques embarqués dans le véhicule V, comme par exemple des capteurs et des calculateurs. Par exemple, et comme illustré non limitativement, le véhicule V peut comprendre un réseau de communication RC, éventuellement de type multiplexé, et permettant à des équipements électroniques embarqués (et notamment le calculateur de supervision CS et l'ordinateur de bord), qui sont connectés à lui, d'échanger des informations et instructions.

Parmi ces instructions, certaines sont destinées à placer la chaîne de transmission dans une position ouverte, dans laquelle son moteur thermique MT ne transmet pas de couple aux roues, ou dans une position fermée dans laquelle son moteur thermique MT transmet du couple aux roues. Dans la position ouverte, la chaîne de transmission peut être placée dans un mode dit de « roue libre » (ou « coasting ») soit avec le moteur thermique MT tournant au ralenti (ou free wheeling) ou coupé (ou sailing)), soit avec les cylindres du moteur thermique MT désactivés (le moteur thermique MT continuant de tourner au ralenti, mais avec des cylindres désactivés). Dans la position fermée, la chaîne de transmission a son embrayage EM en position embrayée et donc transmet du couple (produit par son moteur thermique MT) à la boîte de vitesses BV.

Comme indiqué précédemment, l'invention propose de mettre en oeuvre dans le véhicule V un procédé de contrôle destiné à permettre le contrôle de l'ouverture/fermeture de la chaîne de transmission.

Un tel procédé peut être mis en oeuvre par le dispositif de contrôle DC. Dans l'exemple non limitatif illustré sur la figure 1, le dispositif de contrôle DC fait partie du calculateur de supervision CS de la chaîne de transmission. Mais cela n'est pas obligatoire. Ce dispositif de contrôle DC pourrait en effet être un équipement indépendant, éventuellement couplé au calculateur de supervision CS. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Dans ce qui suit on appellera « premier véhicule V » un véhicule équipé d'un dispositif de contrôle DC selon l'invention, et « second véhicule » un véhicule circulant devant le premier véhicule V (et disposant éventuellement d'un dispositif de contrôle DC).

Le procédé de contrôle, selon l'invention, est initié lorsque le premier véhicule V circule sur une voie de circulation en étant précédé par un second véhicule, et que son conducteur n'appuie plus sur la pédale d'accélérateur.

Ce procédé de contrôle comprend une étape dans laquelle, lorsque les conditions mentionnées au paragraphe précédent sont réunies, le premier véhicule V (et plus précisément son dispositif (de contrôle) DC) détermine si il doit subir une première décélération d1 qui est supérieure à une seconde décélération d2 assurée par sa chaîne de transmission lorsqu'elle est fermée. Dans l'affirmative (d1 > d2), le premier véhicule V maintient fermée sa chaîne de transmission. Dans la négative (d1 $\leq$ d2), le premier véhicule V ouvre sa chaîne de transmission.

En fait, dans l'affirmative (d1 > d2) le dispositif de contrôle DC ordonne au calculateur de supervision CS de maintenir fermée la chaîne de transmission, et dans la négative (d1 $\leq$ d2) le dispositif de contrôle DC ordonne au calculateur de supervision CS d'ouvrir la chaîne de transmission.

On entend ici par « seconde décélération d2 » la décélération qui résulte du frein moteur lorsque la chaîne de transmission est fermée et en présence d'une coupure de l'injection dans les cylindres du moteur thermique MT. Cette seconde décélération d2 correspond à un couple négatif au niveau des roues motrices.

Le dispositif DC peut être informé de la présence du second véhicule d'au moins deux façons.

Une première façon consiste à faire émettre par voie d'ondes par le second véhicule un message comportant des informations qui le concernent, et en particulier sa vitesse en cours. Cette émission d'un message se fait soit automatiquement, par exemple par programmation toutes les secondes (typiquement), soit à la demande du premier véhicule V consécutivement à l'émission d'un message dédié par voie d'ondes. Dans ce cas, lorsque le premier véhicule V reçoit du second véhicule un message signalant au moins sa vitesse en cours, il (par exemple son dispositif DC) détermine la vitesse relative du second véhicule par rapport à lui en fonction de sa propre vitesse en cours et de la vitesse en cours du second véhicule, et estime la distance le séparant du second véhicule.

La vitesse en cours du premier véhicule V est disponible en interne, par exemple via le réseau de communication embarqué RC.

La distance qui sépare les premier V et second véhicules peut être déterminée à partir de données d'observation acquises dans une zone avant, située devant la partie avant PV du premier véhicule V et comprenant le second véhicule,

par des moyens d'observation MO du premier véhicule V. En variante, elle peut être déterminée à partir de la position géographique en cours du premier véhicule V (fournie par un module de positionnement par satellites embarqué) et de la position géographique en cours du second véhicule V (fournie par un module de positionnement par satellites embarqué puis intégrée dans le message émis par voie d'ondes et contenant sa vitesse en cours).

On notera que pour que les premier V et second véhicules puisse émettre ou recevoir des messages par voie d'ondes, il faut qu'ils comprennent chacun un module de communication. Chaque module de communication peut être agencé de manière à émettre chaque message avec une courte portée, par exemple en utilisant le standard de communication sans fil Bluetooth ou WiFi. Par ailleurs, chaque module de communication peut être éventuellement connecté au réseau de communication embarqué RC de son véhicule. Dans ce cas, chaque échange entre un module de communication et le dispositif DC d'un même véhicule se fait via le réseau de communication embarqué RC de ce dernier. En outre, chaque module de communication d'un véhicule peut être soit le module de communication sans fil de ce véhicule (qui assure les communications avec un réseau de communication sans fil), soit un équipement spécifique faisant partie du dispositif DC et différant de l'éventuel module de communication sans fil de ce véhicule.

Une seconde façon consiste à estimer en interne dans le premier véhicule V la vitesse relative du second véhicule par rapport au premier véhicule V et la distance séparant les premier V et second véhicules en fonction de données d'observation acquises dans la zone avant précitée et de la vitesse en cours du premier véhicule V. Les données d'observation peuvent être acquises dans la zone avant, située devant le premier véhicule V et comprenant le second véhicule, par des moyens d'observation MO du premier véhicule V. Ces données d'observation définissent au moins la vitesse relative du second véhicule V et la distance séparant les premier V et second véhicules.

Les moyens d'observation MO précités peuvent, par exemple, comprendre des caméras numériques et/ou des radars et/ou des lasers scanners et/ou des lidars. Une caméra numérique peut être typiquement implantée dans la partie haute du pare-brise. Un radar peut être implanté dans le bouclier ou pare-chocs avant (qui est installé dans la partie avant PV du premier véhicule V) ou dans la partie haute du pare-brise ou encore sous le capot. Un lidar peut être implanté dans le bouclier ou pare-chocs avant.

Ces moyens d'observation MO peuvent, par exemple et comme illustré non limitativement sur la figure 1, communiquer à des moyens de détection MD les données numériques d'observation acquises dans la zone avant via le réseau de communication embarqué RC. Ces moyens de détection MD du premier véhicule V sont chargés d'analyser les données numériques d'observation acquises, afin de déterminer au moins la distance séparant les premier V et second véhicules et éventuellement la vitesse du second véhicule ou la vitesse relative du second véhicule par rapport au premier véhicule V. Cette distance (séparant les premier V et second véhicules) et cette vitesse du second véhicule ou vitesse relative (du second véhicule par rapport au premier véhicule V) peuvent, par exemple, être déterminés par le dispositif DC.

Les moyens de détection MD peuvent, comme illustré non limitativement sur la figure 1, constituer un équipement électronique embarqué qui est éventuellement connecté au réseau de communication embarqué RC. Mais ce n'est pas obligatoire. En effet, ils pourraient faire partie de l'équipement électronique embarqué comportant le dispositif de contrôle DC (ou constituant ce dernier (DC)), ou bien être implantés dans un calculateur. Par conséquent, les moyens de détection MD peuvent être réalisés sous la forme de modules logiciels ou bien d'une combinaison de circuits électroniques et de modules logiciels.

On notera que les moyens d'observation MO et/ou les moyens de détection MD peuvent éventuellement faire partie du dispositif de contrôle DC. Mais ce n'est pas obligatoire. En effet, ils pourraient faire partie d'un dispositif d'observation embarqué dans le premier véhicule V et assurant au moins une autre fonction au sein de ce dernier (V), comme par exemple la détection de personnes ou d'objets dans l'environnement du premier véhicule V, ou la détection de véhicules en amont et/ou en aval du premier véhicule V pour un système de régulation de vitesse, ou la détection de lignes pour un système d'aide au maintien dans la voie de circulation, ou la détection de panneaux pour l'affichage au conducteur des panneaux applicables.

On notera également que lorsque le conducteur du premier véhicule V n'appuie plus sur la pédale d'accélérateur et que la chaîne de transmission est fermée, le premier véhicule V (et plus précisément son dispositif DC) peut avantageusement estimer une évolution de la distance séparant le premier véhicule V du second véhicule en cas d'ouverture de la chaîne de transmission. Ensuite, le premier véhicule V (et plus précisément son dispositif DC) peut déterminer s'il faut ouvrir la chaîne de transmission, en fonction de cette estimation d'évolution de la distance. Puis, dans la négative, le premier véhicule V maintient fermée la chaîne de transmission sur ordre de son dispositif DC. En revanche, dans l'affirmative le premier véhicule V ouvre sa chaîne de transmission sur ordre de son dispositif DC.

Par exemple, le premier véhicule V (et plus précisément son dispositif DC) peut estimer l'évolution de la distance en fonction de la vitesse relative du second véhicule par rapport au premier véhicule V, de la distance connue séparant les premier V et second véhicules, et d'informations topographiques d'une portion de voie de circulation que les premier V et second véhicules s'apprêtent à emprunter. Ces informations topographiques peuvent, par exemple, être fournies par un module de positionnement par satellites embarqué dans le premier véhicule V. Par exemple, ce module peut fournir la pente de la portion à venir via l'horizon électronique. Si le conducteur n'a pas renseigné une destination, le trajet pris comme référence peut être celui qui est le plus probable. Dans ce cas, à chaque fois que plusieurs trajets sont possibles (par exemple à une intersection), c'est la voie de circulation la plus empruntée statistiquement qui est choisie, et si le premier véhicule V prend un autre trajet que le plus probable, le module de positionnement par satellites recalcule le trajet le plus probable, compte-tenu de ce nouveau trajet pris.

Chaque estimation d'évolution de la distance peut être effectuée comme indiqué ci-après à titre d'exemple illustratif.

Si la chaîne de transmission est fermée, et que le pied est levé de la pédale d'accélérateur, le dispositif DC peut estimer périodiquement l'accélération en fonction du temps (dv/dt) qu'aurait le premier véhicule V à partir d'un instant to si il passait en roue libre. Cette accélération peut être définie par une formule du type $dv/dt = -(k/m).v^2 - g.\sin(a(X(t))) - K_{roulement}$, où $v(t=0) = vo$ est la vitesse du premier véhicule V à l'instant to, $dX/dt\,(t) = v(t)$ est la vitesse du premier véhicule V à l'instant t, $X(t=0) = 0$, $k.v^2$ représente les efforts aérodynamiques subis par le premier véhicule V, $a(X(t))$ est la pente en chaque point $X(t)$, laquelle peut être donnée par la connaissance de l'horizon électronique $a = f(X)$, m est la masse du premier véhicule V, g est l'accélération de la pesanteur, et $K_{roulement}$ est la résistance au roulement du premier véhicule V (en N/kg), laquelle est induite par les pneumatiques, pince et/ou ouverture des trains de roues, et frottements internes des éléments tournants du premier véhicule V.

La condition initiale de vitesse vo est la vitesse en cours connue du premier véhicule V (estimée par les vitesses de rotation des roues et/ou l'évolution de la position).

On notera que la formule d'accélération précédente repose sur les hypothèses suivantes : les efforts aérodynamiques sont proportionnels au carré de la vitesse v et la résistance au roulement est constante. Il ne s'agit que d'un exemple simple de modèle prédictif. Des coefficients « nominaux » peuvent être éventuellement affectés au type du premier véhicule V. On peut utiliser des fonctions plus compliquées et/ou une estimation en temps réel plus précise de ces coefficients par un estimateur (par exemple pour venir modifier les paramètres nominaux en cas d'aérodynamique fortement modifiée par la présence d'un coffre de toit et/ou une masse plus importante due à un chargement).

Le dispositif DC peut donc estimer à chaque instant l'accélération instantanée que l'on aurait si l'on ouvrait la chaîne de transmission, et l'évolution de la vitesse v entre to et $t_0+T$ (T étant un paramètre que l'on peut choisir, par exemple égal à 30 secondes), en utilisant par exemple un modèle numérique du type :

$$v(t_{n+1}) = v(t_n) + T_{ech}\times(-k/m).(v(t_n))^2 - g.\sin(\alpha(X(t_n))) - K_{roulement},$$

où $v(t_0) = v_0$, $X(t_{n+1}) = X(t_n) + T_{ech}\times v(t_n)$, $X(t_0) = 0$, $t_{n+1} = t_n + T_{ech}$, et $T_{ech}$ est la période d'échantillonnage du calcul (par exemple égale à 10 ms).

Lorsque le dispositif DC dispose de la vitesse relative en cours $\Delta v'(t)$ du second véhicule par rapport au premier véhicule V, il peut donc estimer la vitesse v' du second véhicule (si il ne la connaît pas déjà) en utilisant une formule du type $v'(t) = v(t) + \Delta v'(t)$.

En faisant l'hypothèse que la vitesse v' du second véhicule est constante, le dispositif DC peut estimer à chaque instant t l'évolution future de position du second véhicule en utilisant une formule du type :
$X'(t) = X'(t_0) + (t - t_0)\times v'(t_0)$, où $X'(t_0) = D_0$, et $D_0$ est la distance séparant les premier V et second véhicules à l'instant to.

Le dispositif DC peut donc estimer, à chaque instant t, en remplaçant to par t, l'évolution prédite de la distance séparant les premier V et second véhicules en utilisant une formule du type $\Delta X(t_n) = D_0 + X'(t_n) - X(t_n)$.

Si à l'instant t on est au-dessus d'un seuil de distance $D_{seuil}$, et que l'on ne va jamais trouver un n pour lequel on va passer en dessous de ce seuil de distance $D_{seuil}$ (où numériquement si au bout d'un certain temps on n'est toujours pas passé sous le seuil de distance $D_{seuil}$, ou bien si à l'instant t on est déjà en dessous du seuil de distance $D_{seuil}$ et si le différentiel de vitesse $\Delta v'(t)$ est positif (car le second véhicule s'éloigne), alors le dispositif DC peut ordonner l'ouverture de la chaîne de transmission.

On notera également que lorsque le conducteur du premier véhicule V n'appuie plus sur la pédale d'accélérateur et que la chaîne de transmission est ouverte, le premier véhicule V (et plus précisément son dispositif DC) peut avantageusement estimer une évolution de la distance séparant les premier V et second véhicules en cas de fermeture de la chaîne de transmission. Ensuite, le premier véhicule V (et plus précisément son dispositif DC) peut déterminer s'il faut utiliser un frein moteur en fermant la chaîne de transmission, en fonction de cette estimation d'évolution de la distance. Puis, dans la négative, le premier véhicule V maintient ouverte la chaîne de transmission sur ordre de son dispositif DC. En revanche, dans l'affirmative le premier véhicule V ferme sa chaîne de transmission sur ordre de son dispositif DC.

Chaque estimation d'évolution de la distance peut être effectuée comme indiqué ci-après à titre d'exemple illustratif.

Si la chaîne de transmission est ouverte, et que le pied est levé de la pédale d'accélérateur, le dispositif DC peut estimer périodiquement l'accélération en fonction du temps (dv/dt) qu'aurait le premier véhicule V à partir d'un instant to si il utilisait le frein moteur. Cette accélération peut être définie par une formule du type :

$$dv/dt = -(k/m).v^2 - g.\sin(\alpha(X(t))) - K_{roulement} - \gamma_{frein\ moteur}(V),$$

où $v(t=0) = vo$ est la vitesse du premier véhicule V à l'instant to, $dX/dt\ (t) = v(t)$ est la vitesse du premier véhicule V à l'instant t, $X(t=0) = 0$, $k.v^2$ représente les efforts aérodynamiques subis par le premier véhicule V, $a(X(t))$ est la pente en chaque point $X(t)$, laquelle est donnée par la connaissance de l'horizon électronique $a = f(X)$, m est la masse du premier véhicule V, g est l'accélération de la pesanteur, $K_{roulement}$ est la résistance au roulement du premier véhicule V (en N/kg), laquelle peut être induite par les pneumatiques, pince et/ou ouverture des trains de roues, et frottements internes des éléments tournants du premier véhicule V, et $\gamma_{frein\ moteur}(V)$ est le surplus de décélération en frein moteur qui dépend principalement du rapport de la boîte de vitesses BV engagé, lui-même fonction de la vitesse en cours du premier véhicule V.

La condition initiale de vitesse vo est la vitesse en cours connue du premier véhicule V (estimée par les vitesses de rotation des roues et/ou l'évolution de la position).

On notera que la formule d'accélération précédente repose sur les hypothèses suivantes : les efforts aérodynamiques sont proportionnels au carré de la vitesse v et la résistance au roulement est constante. Il ne s'agit que d'un exemple simple de modèle prédictif. Des coefficients « nominaux » peuvent être éventuellement affectés au type du premier véhicule V. On peut utiliser des fonctions plus compliquées et/ou une estimation en temps réel plus précise de ces coefficients par un estimateur (par exemple pour venir modifier les paramètres nominaux en cas d'aérodynamique fortement modifiée par la présence d'un coffre de toit et/ou une masse plus importante due à un chargement).

Le dispositif DC peut donc estimer à chaque instant l'accélération instantanée que l'on aurait si l'on fermait la chaîne de transmission, et l'évolution de la vitesse v entre to et $t_0+T$ (T étant un paramètre que l'on peut choisir, par exemple égal à 30 secondes), en utilisant par exemple un modèle numérique du type :

$$v(t_{n+1}) = v(t_n) + T_{ech}\times(-k/m).(v(t_n))^2 - g.\sin(\alpha(X(t_n))) - K_{roulement} - \gamma_{frein\ moteur}(V),$$

où $v(t_0) = v_0$, $X(t_{n+1}) = X(t_n) + T_{ech}\times V(t_n)$, $X(t_0) = 0$, $t_{n+1} = t_n + T_{ech}$, et $T_{ech}$ est la période d'échantillonnage du calcul (par exemple égale à 10 ms).

Lorsque le dispositif DC dispose de la vitesse relative en cours $\Delta v'(t)$ du second véhicule par rapport au premier véhicule V, il peut donc estimer la vitesse v' du second véhicule (si il ne la connaît pas déjà), puis son accélération en utilisant des formules du type :

$$v'(t) = v(t) + \Delta v'(t),$$

$$dv'/dt\ (t) = dv(t)/dt + d\Delta v'(t)/dt\ (en\ numérique).$$

Si la décélération est positive, alors on n'en tient pas compte, et on la considère égale à 0. Le dispositif DC peut alors estimer à chaque instant t l'évolution future de position du second véhicule en utilisant une formule du type $X'(t) = X'(t_0) + (t - t_0)\times v'(t_0)$, où $X'(t_0) = D_0$, et $D_0$ est la distance séparant les premier V et second véhicules à l'instant to.

Si la décélération est négative, alors on peut faire l'hypothèse qu'elle dure un bref instant, par exemple deux secondes. Cette dernière durée limitée est nécessaire pour éviter de passer en frein moteur si un troisième véhicule situé « assez loin » freine sur un petit intervalle de temps, alors qu'il ne présente aucun « danger ». Le dispositif DC peut alors estimer à chaque instant t les évolutions futures des vitesse v' et position X' du second véhicule en utilisant des formules du type :

$$v'(t) = v'(t_0) + (t - t_0)xdv'(t_0)/dt,\ avec\ v'(t_0) = v(t_0) + \Delta v'(t_0),$$

$$X'(t) = X'(t_0) + (t - t_0)\times v'(t_0) + [(t - t_0)^2/2]xdv'(t_0)/dt,\ où\ X'(t_0) = D_0.$$

Le dispositif DC peut donc estimer, à chaque instant t, en remplaçant to par t, l'évolution prédite de la distance séparant les premier V et second véhicules en utilisant une formule du type $\Delta X(t_n) = D_0 + X'(t_n) - X(t_n)$.

Si à l'instant t on est au-dessus d'un seuil de distance $D_{seuil}$, et que l'on va trouver un n pour lequel on va passer en dessous de ce seuil de distance $D_{seuil}$, ou bien si à l'instant t on est déjà en dessous du seuil de distance $D_{seuil}$ et si le différentiel de vitesse $\Delta v'(t)$ est négatif (car le second véhicule se rapproche), alors le dispositif DC peut ordonner la fermeture de la chaîne de transmission.

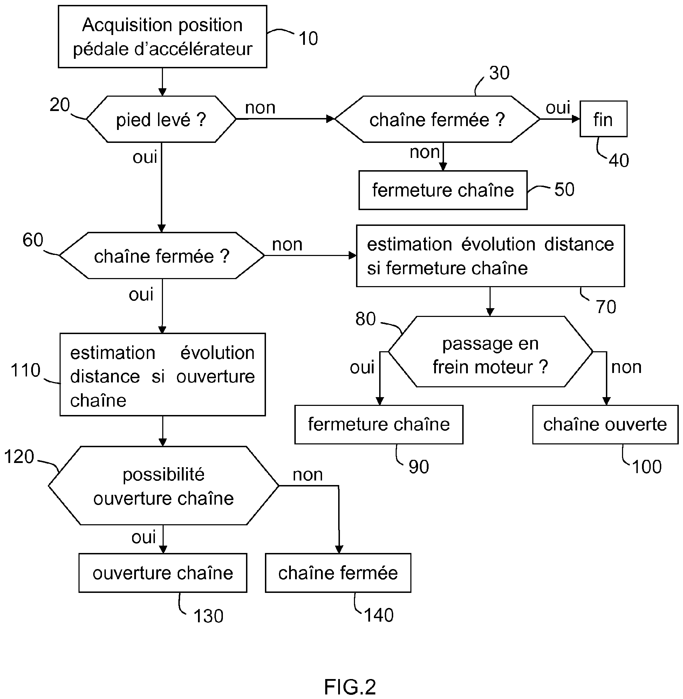

On a schématiquement illustré sur la figure 2 un exemple non limitatif d'algorithme mettant en oeuvre un procédé de contrôle selon l'invention.

Dans une sous-étape 10, on (le dispositif DC) reçoit une information représentative de la position en cours acquise de la pédale d'accélérateur.

Dans une sous-étape 20, on (le dispositif DC) effectue un test afin de déterminer si le conducteur a son pied levé de la pédale d'accélérateur.

Dans la négative (« non »), on effectue une sous-étape 30 dans laquelle on (le dispositif DC) effectue un autre test afin de déterminer si la chaîne de transmission est fermée. Dans l'affirmative (« oui »), on met fin au procédé dans une sous-étape 40. Dans la négative (« non »), on effectue une sous-étape 50 dans laquelle on ferme la chaîne de transmission et on met fin au procédé.

Si le résultat du test de la sous-étape 20 est positif (et donc dans l'affirmative), on effectue une sous-étape 60 dans laquelle on (le dispositif DC) effectue un autre test afin de déterminer si la chaîne de transmission est fermée. Dans la négative (« non »), on effectue une sous-étape 70 dans laquelle on (le dispositif DC) estime l'évolution de la distance entre les premier V et second véhicule si l'on fermait la chaîne de transmission. Cette estimation peut se faire en fonction de la vitesse relative $\Delta v'$ entre les premier V et second véhicules, de la distance séparant les premier V et second véhicules, et de la pente de la portion de voie de circulation que les premier V et second véhicules s'apprêtent à emprunter. Puis, dans une sous-étape 80, on (le dispositif DC) effectue un autre test afin de déterminer si il est nécessaire de refermer la chaîne de transmission pour utiliser le frein moteur. Dans l'affirmative (« oui »), on effectue une sous-étape 90 dans laquelle on (le dispositif DC) ferme la chaîne de transmission et on met fin au procédé. Dans la négative (« non »), on effectue une sous-étape 100 dans laquelle on maintient la chaîne de transmission ouverte et on met fin au procédé.

Si le résultat du test de la sous-étape 60 est négatif (et donc dans la négative), on effectue une sous-étape 110 dans laquelle on (le dispositif DC) estime l'évolution de la distance entre les premier V et second véhicule si l'on ouvrait la chaîne de transmission. Cette estimation peut se faire en fonction de la vitesse relative $\Delta v'$ entre les premier V et second véhicules, de la distance séparant les premier V et second véhicules, et de la pente de la portion de voie de circulation que les premier V et second véhicules s'apprêtent à emprunter. Puis, dans une sous-étape 120, on (le dispositif DC) effectue un autre test afin de déterminer si il est utile d'ouvrir la chaîne de transmission. Dans l'affirmative (« oui »), on effectue une sous-étape 130 dans laquelle on (le dispositif DC) ouvre la chaîne de transmission et on met fin au procédé. Dans la négative (« non »), on effectue une sous-étape 140 dans laquelle on maintient la chaîne de transmission fermée et on met fin au procédé.

L'invention permet avantageusement d'améliorer l'agrément de conduite d'un véhicule lorsqu'il suit un autre véhicule et dispose d'une fonction de roue libre (free wheeling ou sailing ou encore free wheeling avec cylindres désactivés), du fait d'une désactivation de cette fonction de roue libre dans certaines situations de vie qui le nécessiteraient.

## Revendications

1. Procédé de contrôle de l'ouverture/fermeture d'une chaîne de transmission d'un premier véhicule (V) comportant une pédale d'accélérateur, et comprenant une étape dans laquelle, lorsqu'un second véhicule circule devant ledit premier véhicule (V) à une distance connue et avec une vitesse relative connue par rapport audit premier véhicule (V), ce dernier (V) détermine, lorsque son conducteur n'appuie plus sur ladite pédale d'accélérateur, si il doit subir une première décélération supérieure à une seconde décélération assurée lorsque ladite chaîne de transmission est fermée, et **caractérisé en ce que** dans l'affirmative il maintient fermée cette dernière, tandis que dans la négative il ouvre ladite chaîne de transmission.

2. Procédé selon la revendication 1, **caractérisé en ce que** ledit second véhicule émet par voie d'ondes un message signalant au moins sa vitesse en cours, et à réception dudit message ledit premier véhicule (V) détermine ladite vitesse relative dudit second véhicule en fonction de sa propre vitesse en cours et de ladite vitesse en cours du second véhicule, et estime ladite distance le séparant dudit second véhicule à partir, au moins, d'une position géographique du premier véhicule et d'une position géographique du second véhicule.

3. Procédé selon la revendication 1, **caractérisé en ce que** ledit premier véhicule (V) estime ladite vitesse relative dudit second véhicule et ladite distance le séparant dudit second véhicule en fonction de données d'observation, acquises dans une zone avant comprenant ledit second véhicule par des moyens d'observation (MO) qu'il comprend, et de sa propre vitesse en cours.

4. Dispositif (DC) pour contrôler l'ouverture/fermeture d'une chaîne de transmission d'un premier véhicule (V) comportant une pédale d'accélérateur, et agencé pour déterminer, lorsqu'un second véhicule circule devant ledit premier véhicule (V) à une distance connue et avec une vitesse relative connue par rapport audit premier véhicule (V), et lorsqu'un conducteur dudit premier véhicule (V) n'appuie plus sur ladite pédale d'accélérateur, si ledit premier véhicule (V) doit subir une première décélération supérieure à une seconde décélération assurée lorsque ladite chaîne de transmission est fermée, et **caractérisé en ce qu'**il est agencé dans l'affirmative pour ordonner le maintien de la fermeture de cette dernière, ou dans la négative pour ordonner une ouverture de ladite chaîne de transmission.

5. Véhicule (V) comprenant une chaîne de transmission et une pédale d'accélérateur, **caractérisé en ce qu'**il comprend en outre un dispositif de contrôle (DC) selon la revendication 4.

6. Véhicule selon la revendication 5, **caractérisé en ce qu'**il est de type automobile.

## Patentansprüche

1. Verfahren zum Steuern der Öffnung/Schließung eines Antriebsstrangs eines ersten Fahrzeugs (V), das ein Gaspedal aufweist, und umfassend einen Schritt, in dem, wenn ein zweites Fahrzeug vor dem ersten Fahrzeug (V) in einem bekannten Abstand und mit einer bekannten relativen Geschwindigkeit in Bezug auf das erste Fahrzeug (V) fährt, dieses Letztere (V), wenn sein Fahrer nicht mehr auf das Gaspedal drückt, bestimmt, ob es eine erste Verlangsamung erfahren soll, die größer ist als eine zweite Verlangsamung, die sichergestellt wird, wenn der Antriebsstrang geschlossen ist, und **dadurch gekennzeichnet, dass**, wenn ja, es diesen Letzteren geschlossen hält, während, wenn nein, es den Antriebsstrang öffnet.

2. Verfahren nach Anspruch 1, **dadurch gekennzeichnet, dass** das zweite Fahrzeug über Wellen eine Nachricht aussendet, die mindestens seine aktuelle Geschwindigkeit signalisiert, und bei Empfang der Nachricht das erste Fahrzeug (V) die relative Geschwindigkeit des zweiten Fahrzeugs in Abhängigkeit von seiner eigenen aktuellen Geschwindigkeit und von der aktuellen Geschwindigkeit des zweiten Fahrzeugs bestimmt, und den Abstand, der es von dem zweiten Fahrzeug trennt, mindestens ausgehend von einer geografischen Position des ersten Fahrzeugs und von einer geografischen Position des zweiten Fahrzeugs schätzt.

3. Verfahren nach Anspruch 1, **dadurch gekennzeichnet, dass** das erste Fahrzeug (V) die relative Geschwindigkeit des zweiten Fahrzeugs und den Abstand, der es von dem zweiten Fahrzeug trennt, in Abhängigkeit von Beobachtungsdaten, die in einem vorderen Bereich, der das zweite Fahrzeug umfasst, durch Beobachtungsmittel (MO), die es umfasst, erfasst werden, und von seiner eigenen aktuellen Geschwindigkeit schätzt.

4. Vorrichtung (DC) zum Steuern der Öffnung/Schließung eines Antriebsstrangs eines ersten Fahrzeugs (V), das ein Gaspedal aufweist und die angeordnet ist, um zu bestimmen, wenn ein zweites Fahrzeug vor dem ersten Fahrzeug (V) in einem bekannten Abstand und mit einer bekannten relativen Geschwindigkeit in Bezug auf das erste Fahrzeug (V) fährt, und wenn ein Fahrer des ersten Fahrzeugs (V) nicht mehr auf das Gaspedal drückt, ob das erste Fahrzeug (V) eine erste Verlangsamung erfahren soll, die größer ist als eine zweite Verlangsamung, die sichergestellt wird, wenn der Antriebsstrang geschlossen ist, und **dadurch gekennzeichnet, dass** sie angeordnet ist, um, wenn ja, das Halten der Schließung dieses Letzteren zu befehlen, oder um, wenn nein, eine Öffnung des Antriebsstrangs zu befehlen.

5. Fahrzeug (V), umfassend einen Antriebsstrang und ein Gaspedal, **dadurch gekennzeichnet, dass** es weiter eine Steuervorrichtung (DC) nach Anspruch 4 umfasst.

6. Fahrzeug nach Anspruch 5, **dadurch gekennzeichnet, dass** es vom Typ Kraftfahrzeug ist.

## Claims

1. Method for controlling the opening/closing of a transmission chain of a first vehicle (V) having an accelerator pedal, and comprising a step wherein, when a second vehicle moves in front of said first vehicle (V) at a known distance and with a relative speed known with respect to said first vehicle (V), the latter (V) determines, when the driver thereof no longer presses said accelerator pedal, if it must undergo a first deceleration greater than a second deceleration ensured when said transmission chain is closed, and **characterised in that** if so, it keeps the latter closed, while if not, it opens said transmission chain.

2. Method according to claim 1, **characterised in that** said second vehicle emits via waves, a message signalling at least the current speed thereof, and upon reception of said message, said first vehicle (V) determines said relative speed of said second vehicle, according to its own current speed and said current speed of the second vehicle, and estimates said distance separating it from said second vehicle from, at least, one geographic position of the first vehicle and one geographic position of the second vehicle.

3. Method according to claim 1, **characterised in that** said first vehicle (V) estimates said relative speed of said second vehicle and said distance separating it from said second vehicle according to observation data, acquired in a front zone comprising said second vehicle by the observation means (MO) that it comprises, and its own current speed.

4. Device (DC) for controlling the opening/closing of a transmission chain of a first vehicle (V) having an accelerator pedal, and arranged to determine, when a second vehicle moves in front of said first vehicle (V) at a known distance and with a relative speed known with respect to said first vehicle (V), and when a driver of said first vehicle (V) no longer presses said accelerator pedal, if said first vehicle (V) must undergo a first deceleration greater than a second deceleration ensured when said transmission chain is closed, and **characterised in that** it is arranged, if so, to command the latter to be kept closed, or if not, for said transmission chain to be opened.

5. Vehicle (V) comprising a transmission chain and an accelerator pedal, **characterised in that** it further comprises a control device (DC) according to claim 4.

6. Vehicle according to claim 5, **characterised in that** it is of the automotive type.

FIG.1

Acquisition position
pédale d'accélérateur — 10

20 — pied levé ? — non → chaîne fermée ? — oui → fin — 40

30

oui (20)
non (30) → fermeture chaîne — 50

60 — chaîne fermée ? — non → estimation évolution distance si fermeture chaîne — 70

oui (60)

110 — estimation évolution distance si ouverture chaîne

80 — passage en frein moteur ?

oui → fermeture chaîne — 90

non → chaîne ouverte — 100

120 — possibilité ouverture chaîne — non

oui → ouverture chaîne — 130

chaîne fermée — 140

FIG.2

**RÉFÉRENCES CITÉES DANS LA DESCRIPTION**

**Documents brevets cités dans la description**

- EP 2738412 A
- EP 1475265 A